# EUROPEAN PATENT APPLICATION

(11) **EP 2 478 951 A1**
(43) Date of publication of application: **25.07.2012**
(21) Application number: 11151701.7
(22) Date of filing: 21.01.2011
(51) Int. Cl.: B01D 53/14, B01D 53/62

(54) **Process for sequestration of carbon dioxide**

(71) Applicant: Shell Internationale Research Maatschappij B.V., 2596 HR The Hague (NL)
(72) Inventor: van Mossel, Gerardus Antonius Franciscus, 1031 HW Amsterdam (NL); Oudwater, Ronald, 1058 NJ Amsterdam (NL); Verduyn, Marinus Aris, 1031 HW Amsterdam (NL)
(74) Representative: Matthezing, Robert Maarten

(57) **Abstract**

The present invention provides a process for sequestration of carbon dioxide comprising:
a. providing a mixture comprising a Mg-comprising silicate hydroxide mineral and Mg(OH)₂; and
b. contacting a carbon dioxide-comprising gas stream with an aqueous slurry comprising the mixture to obtain an aqueous magnesium bicarbonate solution and/or magnesium carbonate and to sequestrate at least part of the carbon dioxide in the carbon dioxide-comprising gas stream.

## Description

### Field of the invention

The present invention provides a process for sequestration of carbon dioxide.

### Background of the invention

The rising carbon dioxide concentration in the atmosphere due to the increased use of energy derived from fossil fuels potentially may have a large impact on the global climate. Thus there is an increasing interest in measures to reduce the carbon dioxide concentration emissions to the atmosphere.

In order to reduce the carbon dioxide emission a number of carbon dioxide capture and carbon dioxide sequestration processes have been studied. One such process involves the sequestration of carbon dioxide by mineral carbonation (or mineralisation) to form a mineral carbonate.

It is known that carbon dioxide may be sequestered by mineral carbonation. In nature, stable carbonate minerals and silica are formed by a reaction of carbon dioxide with natural silicate minerals:

(Mg,Ca)ₓSi_{y}O_{x+2y} + xCO₂ ⇒ x(Mg, Ca)CO₃ + ySiO₂

It is known that orthosilicates can be relatively easy reacted with carbon dioxide to form carbonates and can thus suitably be used for carbon dioxide sequestration. Examples of magnesium or calcium orthosilicates suitable for mineral carbonation are olivine, in particular forsterite, and monticellite. Examples of suitable silicates are minerals of the pyroxene and pyroxenoid group, in particular enstatite or wollastonite.

In WO02/085788 for example, is disclosed a process for mineral carbonation of carbon dioxide wherein particles of silicates selected from the group of ortho-, di-, ring, and chain silicates, are dispersed in an aqueous electrolyte solution and reacted with carbon dioxide.

The more abundantly available magnesium or calcium silicate hydroxide minerals, for example serpentine and talc, are sheet silicates and are more difficult to convert into carbonates, i.e. the reaction times for carbonation are much longer. Such sheet silicate hydroxides preferably undergo a heat treatment or activation at elevated temperatures prior to the reaction with carbon dioxide.

Activation of serpentine has for instance been discussed in WO200706014 and WO2008142017, wherein serpentine is activated using either a hot syngas or a hot flue gas. WO200814201 also mentions the use of fluidized beds for activating serpentine.

In S.J.Gerdemann et al. (Carbon dioxide sequestration by aqueous mineral carbonation of magnesium silicate, Second Annual Conference on Carbon Sequestration, 5 -8 May 2003, Alexandria, USA), it is disclosed that heat-treating serpentine for 1 hour at 630°C leads to improved carbonation rates. However, the maximum conversion, i.e. the extent of the subsequent reaction with carbon dioxide, is much lower than the conversion obtained using olivine.

There is a need in the art for further improving the carbonation properties of serpentine.

### Summary of the invention

It has now been found that the sequestration of carbon dioxide using a serpentine can be improved by using a mixture that comprises serpentine and Mg(OH)₂, in particular a mineral mixture of serpentine and brucite.

Accordingly, the present invention provides a process for sequestration of carbon dioxide comprising:
a. providing a mixture comprising a Mg-comprising silicate hydroxide mineral and Mg(OH)₂; and
b. contacting a carbon dioxide-comprising gas stream with an aqueous slurry comprising the mixture to obtain an aqueous magnesium bicarbonate solution and/or magnesium carbonate and the sequestrate at least part of the carbon dioxide in the carbon dioxide-comprising gas stream.

It has been found that by providing a mixture that comprises a Mg-comprising silicate hydroxide mineral and Mg(OH)₂, the need to activate the silicate hydroxide mineral was reduced if not removed. In addition, more carbon dioxide can be captured per unit of raw mineral used.

### Detailed description of the invention

The present invention provides a process for carbon dioxide sequestration using a mixture comprising a Mg-comprising silicate hydroxide mineral and Mg(OH)₂. A preferred silicate hydroxide mineral is serpentine. Although serpentine-type minerals exist that do not comprise magnesium, reference herein to serpentine is to a magnesium-comprising serpentine.

Silicate minerals may have different structures. For instance, silicates may be composed of orthosilicate monomers, i.e. the orthosilicate ion SiO₄⁴⁻ which has a tetrahedral structure. Orthosilicate monomers form oligomers by means of O-Si-O bonds at the polygon corners. The Q^{S} notation refers to the connectivity of the silicon atoms. The value of superscript s defines the number of nearest neighbour silicon atoms to a given Si. Orthosilicates, also referred to as nesosilicates, are silicates which are composed of distinct orthosilicate tetrathedra that are not bonded to each other by means of O-Si-O bonds (Q⁰ structure). Other structures include chain silicates, also referred to as inosilicates, which might be single chain (SiO₃²⁻ as unit structure, i.e. a (Q²)ₙ structure) or double chain silicates ((Q³Q²)ₙ structure). Also known are sheet silicate hydroxides, also referred to as phyllosilicates, which have a sheet structure (Q³)ₙ.

Sheet silicate hydroxide minerals, in particular the abundantly available magnesium-comprising silicate hydroxide minerals, such as for example serpentine-type minerals, are more difficult to convert into carbonates, i.e. the reaction times for carbonation are much longer than for instance the well know magnesium silicate olivine. It is know that the reaction times for carbonation can be reduced, when, prior to contacting the carbon dioxide, the magnesium-comprising silicate hydroxide minerals, such as serpentine-type minerals, undergo a heat treatment or activation at elevated temperatures prior to the reaction with carbon dioxide.

Above a certain temperature, the serpentine mineral is at least partly converted into its corresponding ortho- or chain silicate mineral, silica and water. Additionally, the activation of silicate hydroxide minerals may include a conversion of part of the silicate hydroxide minerals into an amorphous sheet silicate hydroxide mineral derived compound.

It has now been found that by providing a mixture comprising a Mg-comprising silicate hydroxide mineral and Mg(OH)₂ the need to activate the Mg-comprising silicate hydroxide mineral is reduced or even removed.

Without wishing to be bound to any particular theory, it is believed that the sequestration process can be divided into several sub-processes, of which one relates to the extraction, or leaching, of magnesium ions from the silicate hydroxide mineral. This is an important process as it is believed that the magnesium ions must be extracted from the mineral before they can react with carbon dioxide and water to from magnesium carbonate or the intermediate magnesium bicarbonate.

The extent to which magnesium ions can be extracted from the Mg-comprising mineral also determines the efficiency of the sequestration process with respect to the amount of carbon dioxide that can be captured per unit of raw mineral. It has now been found that in the presence of Mg(OH)₂, the extraction efficiency is improved of the extraction of the magnesium ions from the Mg-comprising silicate hydroxide mineral is reduced. Reference herein to extraction of magnesium ions is to a conversion of the magnesium-comprising silicate or silicate hydroxide mineral wherein at least part of the magnesium, is removed from the mineral and dissolved in the aqueous medium as magnesium cations. Reference herein to the extent of extraction is to the mole% of magnesium leached from the mineral, based on the total number of moles of magnesium present in the original mineral.

Preferably, the mixture comprises in the range of from 1 to 50wt% of Mg(OH)₂, based on the total weight of the mixture. More preferably, the mixture comprises in the range of from 2 to 45wt%, even more preferably of from 5 to 40 wt% Mg(OH)₂, based on the total weight of the mixture. It has been found that when Mg(OH)₂ is present in a mixture of non-activated serpentine and Mg(OH)₂, magnesium ions from the non-activated serpentine are extracted more effectively.

Preferably, the Mg(OH)₂ is provided in the form of brucite. Brucite is a naturally occurring mineral of magnesium hydroxide. Brucite may sometimes be found in nature in association with for instance serpentine. Therefore, preferably, the mixture as provided in step (a) of the present invention is a naturally occurring mixture of serpentine and brucite.

The mixture may consist or essentially consist of a Mg-comprising silicate hydroxide mineral and Mg(OH)₂, preferably serpentine and brucite, however typically it will comprise other materials. Preferably, the mixture comprises in the range of from 10 to 100wt%, more preferably 50 to 100wt% of a Mg-comprising silicate hydroxide mineral and Mg(OH)₂, preferably serpentine and brucite, based on the total weight of the mixture. The mixture may also comprise amounts of minerals other than Mg-comprising silicates hydroxide minerals, such as other silicate hydroxides not comprising magnesium and silicate minerals as for instance olivine. Other components comprised in the mixture may include for instance sand, clay, metal oxides, metal hydroxides or one or more metal carbonates, such as magnesium carbonate or calcium carbonate. The other materials may be present in the mixture as separate entities or they may be part of the Mg-comprising silicate hydroxide mineral or may be associated with the Mg(OH)₂, for instance in the form of contaminates in the brucite ore.

The Mg-comprising silicate hydroxide mineral and Mg(OH)₂ content in the mixture can be determined using known techniques in the art. For example XRD (X-ray diffraction) with Rietveld refining using corundum as a tracer can be used to determine the crystal composition and XRF (X-ray fluorescence spectrometry) can be used to determine the elemental composition.

In the process according to the invention the mixture provided in step (a) is contacted in step (b) with a carbon-dioxide gas in the form of an aqueous slurry comprising the mixture. Preferably, the mixture is present in the aqueous slurry in the form of particles, wherein an individual mixture particle either comprises both the Mg-comprising silicate hydroxide mineral and Mg(OH)₂, preferably serpentine and brucite or only one thereof. Preferably, at least part of the mixture particles comprises both the Mg-comprising silicate hydroxide mineral and Mg(OH)₂, preferably serpentine and brucite.

In step (b), a carbon dioxide-comprising gas stream is contacted with the aqueous slurry comprising the mixture particles. Preferably, the carbon dioxide-comprising gas stream is contacted with the aqueous slurry comprising the mixture particles at a temperature in the range of from 1 to 100°C, more preferably 10 to 60°C, even more preferably 15 to 50°C and at a carbon dioxide partial pressure in the range of from 0.01 to 35 bara, more preferably 0.05 to 25 bara, even more preferably 0.1 to 10 bara. Preferably, an electrolyte is added to the aqueous slurry in order to improve the formation of the bicarbonate and the extraction of metal ions from the mineral. Preferably, sodium or potassium bicarbonate is provided to the aqueous slurry and/or optionally to the aqueous bicarbonate solution, preferably in an amount as to obtain a sodium or potassium bicarbonate concentration of 1 mol or less per litre of the aqueous medium, i.e. not including solids.

The mixture particles may have any suitable size, preferably the particles have an average particle size in the range of from 0.1 µm to 5 cm, more preferably 0.5 to 500 µm. Reference herein to average diameter is to the volume medium diameter D(v,0.5), meaning that 50 volume% of the particles have an equivalent spherical diameter that is smaller than the average diameter and 50 volume% of the particles have an equivalent spherical diameter that is greater than the average diameter. The equivalent spherical diameter is the diameter calculated from volume determinations, e.g. by laser diffraction measurements or sieving.

In order to reach optimal extraction of the magnesium cations from the mineral particles it is preferred that the mixture particles have an average particle size of 50 µm or less, more preferably 15 µm or less.

The preferred particle size may be obtained by any suitable process for reducing the size of particles. Preferably, the process for reducing the particle size is a mechanical process, further referred to as grinding. Examples of grinding processes are for instance dry or wet grinding. Reference herein to wet grinding is to grinding in the presence of a suitable grinding fluid. Dry grinding of mineral to obtain particles of such small dimensions, however, is difficult, requires significantly more power and may require additional safety measure due to the formation of dust particles. Therefore, preferably, at least part of the mineral grinding is performed by wet grinding, preferably using an aqueous medium as grinding fluid.

For instance, the mineral may by dry grinded or crushed to an average particle size of approximately 500 µm and subsequently, after addition of the aqueous medium, wet grinded to the desired final average particle diameter. However, it is also possible to perform the complete grinding in the presence of the aqueous medium.

It is particularly advantageous and therefore preferred to combine the treatment to reduce the average particle size of the mineral particles with step (b) of the process according to the invention. More preferably, during step (b) the mixture particles are treated to reduce the average particle size to an average particle size in the range of from 0.1 to 50 µm, even more preferably of from 0.5 to 15 µm. Typically, the treatment for reducing the average particle size will be grinding, or wet grinding as the mineral is provided to step (b) in the form of an aqueous slurry. When carbon dioxide is contacted with the aqueous medium and the mineral during grinding, the extent of magnesium cation extraction from the mineral is increased and consequently the amount of carbon dioxide that can be captured per unit of raw mineral is increased.

During step (b), the aqueous slurry of mixture particles is preferably contacted with carbon dioxide-comprising gas for in the range of from 1 to 60 minutes, preferably 10 to 30 minutes. Preferably, at least 35 mol%, more preferably at least 40 mol% of magnesium cations present in the Mg-comprising mineral is extracted and dissolved in the aqueous medium to form an aqueous bicarbonate solution or precipitated as magnesium carbonate, based on the total amount of magnesium cations present in the mineral prior to step (b).

During contact with the aqueous slurry at least part of the carbon dioxide comprised in the carbon dioxide-comprising gas is transferred to the aqueous phase, either in the form of bicarbonate or as dissolved carbon dioxide and a carbon dioxide-depleted gas is obtained. It will be appreciated that in case the carbon dioxide-comprising gas was pure CO₂ when contacted with the aqueous slurry, the carbon dioxide-depleted gas still comprises pure carbon dioxide, however part of the carbon dioxide originally comprised carbon dioxide-comprising gas has been removed.

In addition, at least part of the mineral is converted to magnesium bicarbonate, typically an aqueous solution of magnesium bicarbonate. Precipitated magnesium carbonate and a silica phase are typically also formed.

A particular suitable way of performing step (b) was described in WO2010097451, which is hereby incorporated by reference.

As mentioned herein above Mg-comprising silicate hydroxide minerals such as serpentine-type minerals are conventionally subjected to a heat treatment prior to being contacted with the carbon dioxide-comprising gas to activate the mineral.

It is an advantage of the present invention that the need for activating the Mg-comprising silicate hydroxide mineral can be reduced if not removed by contacting the silicate hydroxide mineral with water and carbon dioxide in the presence of Mg(OH)₂ together. In case, it is observed that activation of the Mg-comprising silicate hydroxide mineral is still required, it is preferred that at least part of the Mg-comprising silicate hydroxide mineral is subjected to a heat treatment prior to step (b) to active at least part of the Mg-comprising silicate hydroxide mineral. The Mg-comprising silicate hydroxide mineral may be subjected to the heat treatment alone or on the form of the mixture comprising Mg-comprising silicate hydroxide mineral and Mg(OH)₂. The latter is particularly preferred in case a naturally occurring mixture comprising serpentine and brucite is used.

The heat treatment or activation of serpentine minerals for mineralisation purposes has been described in for instance EP1951424, herein incorporated by reference, and can be used for activating the silicate hydroxide mineral in the process according to the present invention. In EP1951424, the activation is performed by contacting the mineral with hot synthesis gas. However, it will be appreciated that also other hot gases may be used such as for instance hot flue gas.

Preferably, the mineral is subjected to a heat treatment at a temperature in the range of from 550 to 800°C, preferably of from 600 to 700°C. Suitable activation temperatures and activation times are described in WO2010097444, herein incorporated by reference.

Preferably, such an activation is performed in a fluidized bed reactor, in particular in a fluidized bed reactor, wherein a combustible fuel is provided together with a molecular oxygen-comprising gas, for instance natural gas and air, and the combustible gas is combusted inside the fluidized bed. This allows for a better control of the temperature in the fluidized bed and may result in an improved activated mineral quality, i.e. a high possible extent of leaching.

Preferably, the Mg-comprising silicate hydroxide mineral or the mixture comprising Mg-comprising silicate hydroxide mineral and Mg(OH)₂ is provided to the activation process in the form of particles having an average particle size in the range of from 100 to 750 µm, more preferably 200 to 500 µm. Such particles are especially suitable when the activation is performed in a fluidized bed reactor. Such particles sizes may be conveniently obtained by crushing the raw mixture or its individual components prior to mixing. Crushing is a relatively simple method that does not require a high energy input. Additionally, there is no direct need to add significant amounts if any of liquids, in that sense crushing is comparable to a dry grinding process. The presence of additional components such as liquids during the activation of the mineral is disadvantageous, as these components require additional energy to be heated.

Subsequent to the activation, the activated mineral or mixture particle size can be further reduced by dry of wet grinding, preferably wet grinding, more preferably wet grinding during step (b) of the process according to the invention, as described herein above.

The aqueous slurry, which is contacted with the carbon dioxide-comprising gas in step (b) of the process according to the invention, may be any suitable aqueous slurry comprising an aqueous medium, preferably water, and mixture particles.

The aqueous slurry suitably contains up to 60 wt% of solid material, i.e. mixture particles, based on the total weight of the aqueous slurry, preferably 10 to 50 wt%. The aqueous slurry may, for example, be formed by mixing mixture particles with the aqueous medium.

The carbon dioxide-comprising gas may be pure carbon dioxide or a mixture of carbon dioxide with one or more other gases. Preferably, the carbon dioxide-comprising gas comprises a carbon dioxide partial pressure of in the range of from 0.01 to 1 bar , preferably 0.05 to 0.5 bar, more preferably 0.1 to 0.2 bar at Standard Temperature and Pressure conditions of 0 °C and 1 bar. Examples of suitable carbon dioxide-comprising gases include flue gas, synthesis gas or the effluent of a water-gas-shift process. Reference herein to synthesis gas is to a gas comprising at least hydrogen, carbon monoxide and optionally carbon dioxide. The carbon monoxide content of synthesis gas may be reduced by a water-gas-shift process wherein carbon monoxide is converted with water to hydrogen and carbon dioxide.

### Examples:

The invention is further illustrated by means of the following non-limiting examples.

The extent to which magnesium ions could be extracted was tested for two mineral samples. Both mineral samples were activated at 630°C for 1 hour prior to determining the extent to which magnesium ions could be extracted.

The extent to which magnesium ions could be extracted was tested by mixing 2 g of mineral particles, 0.84 g of NaHCO₃ and 98 grams of demineralised water in a vessel, while continuously passing a stream of pure carbon dioxide gas at a rate of 2.5 1/h through the mixture. The mixture was continuously stirred under atmospheric pressure and at 20°C.

Contact time with the CO₂ was 3 hours and every 30 minutes samples were taken and analyzed for dissolved magnesium (measured with an ion chromatograph, IC) and the presence of precipitated magnesium carbonate species(using a TGA-MS).

In Table 1, the composition of the mineral samples is shown prior to activation as determined by XRD (X-ray diffraction). Mineral sample A (according to the invention) contains both lizardite (a serpentine type mineral) and brucite (Mg(OH)₂), whereas Mineral sample B (comparative) does not contain brucite.

**Table 1.**

| Sample | A | B |
|---|---|---|
| | | (comparative) |
| | [wt%]* | [wt%]* |
| lizardite | 85.3 | 94.4 |
| brucite | 12.6 | - |
| Other^{#} | 2.1 | 5.6 |

| | | |
|---|---|---|
| *based on the total weight of the mineral sample ^{#}non-reactive | | |

In table 2, the Mg²⁺ ion content in the water as determined after 3 hours is shown. The Mg²⁺ ion content is calculated on the basis of the lizardite content in the mineral sample before activation. The Mg²⁺ concentration for sample A was corrected for the brucite content by deducting the maximum concentration of Mg²⁺ obtained if all Mg²⁺ ions in the brucite would dissolve.

**Table 2**

| Sample | A | B (comparative) |
|---|---|---|
| | [gr/l] | [gr/l] |
| Mg²⁺ content* | 0,0170 | 0,0158 |

| | | |
|---|---|---|
| *based on the lizardite content in the mineral sample before activation and corrected for the brucite content | | |

As will be clear from table 2, the presence of brucite results in an improvement of the extent to which magnesium ions could be extracted by 8% based on the lizardite content in the mineral sample before activation.

## Claims

**1.** A process for sequestration of carbon dioxide comprising:
a. providing a mixture comprising a Mg-comprising silicate hydroxide mineral and Mg(OH)₂; and
b. contacting a carbon dioxide-comprising gas stream with an aqueous slurry comprising the mixture to obtain an aqueous magnesium bicarbonate solution and/or magnesium carbonate and to sequestrate at least part of the carbon dioxide in the carbon dioxide-comprising gas stream.

**2.** A process according to claim 1, wherein the mixture comprises in the range of from 1 to 50wt% of Mg(OH)₂, based on the total weight of mixture.

**3.** A process according to claim 1 or 2, wherein the mixture comprises brucite.

**4.** A process according to any one of the preceding claims, wherein the mixture comprises serpentine and brucite.

**5.** A process according to any one of the preceding claims, wherein at least part of the Mg-comprising silicate hydroxide mineral is subjected to a heat treatment prior to step (b) to active at least part of the mineral.

**4.** A process according to claim 3, wherein the mineral is subjected to a heat treatment at a temperature in the range of from 550 to 800°C, preferably of from 600 to 700°C.

**5.** A process according to any one of the preceding claims, wherein in step (a) the carbon dioxide-comprising gas stream is contacted with the aqueous slurry at a temperature in the range of from 1 to 100°C, preferably 10 to 60°C, more preferably of from 15 to 50°C and a pressure in the range of from 1 to 35 bara, preferably 1.1 to 25 bara, more preferably of from 1.5 to 10 bara.

**6.** A process according to any of the preceding claims, wherein the aqueous slurry of step (b) is prepared by addition of water to mixture particles having a particle size in the range of from 0.1µm to 5cm, more preferably of from 0.5 to 500µm, even more preferably of from 0.5 to 15µm.

**7.** A process according to any one of the preceding claims, wherein the carbon dioxide-comprising gas comprises a carbon dioxide partial pressure of in the range of from 0.01 to 1 bar , preferably 0.05 to 0.5 bar, more preferably 0.1 to 0.2 bar at Standard Temperature and Pressure conditions of 0 °C and 1 bar.
